# EUROPEAN PATENT APPLICATION

(11) **EP 4 633 186 A1**
(43) Date of publication of application: **15.10.2025**
(21) Application number: 23901113.3
(22) Date of filing: 07.12.2023
(51) Int. Cl.: H04N 25/589, H04N 25/705, H04N 25/76

(54) **IMAGE SENSOR**

(30) Priority: 07.12.2022 KR 20220169882; 06.12.2023 KR 20230175836
(71) Applicant: LX Semicon Co., Ltd., Daejeon 34027 (KR)
(72) Inventor: LEE, Sang Jin, Daejeon 34027 (KR)
(74) Representative: Ter Meer Steinmeister & Partner
(86) International application number: PCT/KR2023/020046
(87) International publication number: WO 2024/123095

(57) **Abstract**

Disclosed is an image sensor according to one embodiment. The image sensor includes a pixel array in which a plurality of unit pixels are arranged, a row driver configured to generate a control signal for driving the plurality of unit pixels, a readout circuit configured to collect photoelectric charges from the plurality of unit pixels in units of rows according to the control signal, and a control unit configured to generate a high dynamic range (HDR) image and depth information using the collected photoelectric charges, wherein each of the plurality of unit pixels includes a plurality of first pixels which are exposed for a first exposure time, and a plurality of second pixels which are exposed for a second exposure time shorter than the first exposure time.

## Description

### Technical Field

Embodiments of the present disclosure relate to an image sensor.

### Background Art

Image sensors are being installed in various electronic devices including smartphones. An image sensor can include a charge coupled device (CCD) or a complementary metal-oxide-semiconductor (CMOS) image sensor (CIS). Recent image sensors can be implemented to perform various functions such as calculating a distance of an object or recognizing an object using a sensed image, in addition to simply capturing an external image to display the image.

Further, image sensors can be implemented to obtain high dynamic range (HDR) images as an additional function. A method of obtaining HDR images using differential time-of flight (ToF) pixels has been proposed. However, through this method, it is possible to obtain HDR images, but it is not possible to expand a dynamic range of depth information. Therefore, a method of expanding a dynamic range of depth information while obtaining an HDR image is required.

### Disclosure / Technical Problem

Accordingly, embodiments of the present disclosure are directed to providing an image sensor capable of expanding a dynamic range while obtaining a high dynamic range (HDR) image.

Objects of the present disclosure are not limited to the above-described objects and other objects that are not described can be clearly understood by those skilled in the art from the following descriptions.

### Technical Solution

One aspect of the present disclosure provides an image sensor which includes a pixel array in which a plurality of unit pixels are arranged, a row driver configured to generate a control signal for driving the plurality of unit pixels, a readout circuit configured to collect photoelectric charges from the plurality of unit pixels in units of rows according to the control signal, and a control unit configured to generate an HDR image and depth information using the collected photoelectric charges, wherein each of the plurality of unit pixels includes a plurality of first pixels which are exposed for a first exposure time, and a plurality of second pixels which are exposed for a second exposure time shorter than the first exposure time.

Another aspect of the present disclosure provides an image sensor which includes a pixel array in which a plurality of pixels are arranged, a row driver configured to generate a control signal for driving the plurality of pixels, a first readout circuit configured to collect first photoelectric charges from pixels arranged in odd-numbered rows according to the control signal, a second readout circuit configured to collect second photoelectric charges from pixels arranged in even-numbered rows according to the control signal, and a control unit configured to generate a first image using the collected first photoelectric charges, generate a second image using the collected second photoelectric charges, and generate an HDR image and depth information by combining the first image and the second image.

### Advantageous Effects

According to the embodiments, a plurality of adjacent pixels can configured as single unit pixels, and readout circuits for reading out each of these unit pixels with different exposure time controls and analog gains can be arranged in the upper and lower portions of an image sensor, respectively, so that an HDR image can be formed by combining a first image generated using photoelectric charges collected from pixels arranged in odd-numbered rows and a second image generated using photoelectric charges collected from pixels arranged in even-numbered rows, and thus an SNR of signals in dark portions can be improved, saturation of signals in bright portions can be suppressed and compensated, and an HDR image can be obtained.

According to the embodiments, by expanding the dynamic range, a range of the luminance can be widened as much as the dynamic range is expanded, and thus the sensitivity to distant objects or objects with low reflectivity can be improved.

Effects of the present disclosure are not limited to the above-described effects and other effects that are not described can be clearly understood by those skilled in the art from the description of the claims.

### Description of Drawings

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a diagram illustrating an image sensor of one embodiment of the present disclosure;
FIG. 2 is a diagram illustrating unit pixels of one embodiment of the present disclosure;
FIG. 3 is a diagram illustrating a pixel circuit illustrated in FIG. 1;
FIG. 4 is a diagram illustrating a circuit of an active front end (AFE) illustrated in FIG. 1;
FIG. 5 is a diagram for describing the operation of an image sensor in first and second modes;
FIG. 6 is a diagram illustrating driving waveforms of the image sensor in the first mode;
FIG. 7 is a diagram illustrating driving waveforms of the image sensor in the second mode;
FIG.8-12 diagrams for describing the principle of generating a high dynamic range (HDR) image;
FIG. 13 is a flowchart illustrating a method of generating an image according to one embodiment of the present disclosure;
FIG. 14 is a flowchart illustrating a process of generating an HDR image;
FIG. 15 is a flowchart illustrating a process of generating a standard dynamic range (SDR) image;
FIGS. 16 to 19 are graphs for describing the expansion of dynamic ranges of an image sensor.

### Mode for Invention

Advantages and features of the present disclosure, and implementation methods thereof will be clarified through following embodiments described with reference to the accompanying drawings. The present disclosure can, however, be embodied in different forms and should not be construed as limited to the embodiments set forth herein. Rather, these embodiments are provided so that this disclosure will be thorough and complete, and will fully convey the scope of the present disclosure to those skilled in the art. Furthermore, the present disclosure is only defined by scopes of claims.

A shape, a size, a ratio, an angle, and a number disclosed in the drawings for describing embodiments of the present disclosure are merely an example, and thus the present disclosure is not limited to the illustrated details. Like reference numerals refer to like elements throughout. In the following description, when the detailed description of the relevant known technology is determined to unnecessarily obscure the important point of the present disclosure, the detailed description will be omitted.

In a case where "comprise," "have," and "include" described in the present disclosure are used, another part can be added unless "only" is used. The terms of a singular form can include plural forms unless referred to the contrary.

In construing an element, the element is construed as including an error range although there is no explicit description.

When a temporal precedence relationship is described such as "after", "following", "next", "before", etc., it can include cases that are not consecutive unless "immediately" or "directly" are used.

When a position relation between two parts is described as "on", "over", "under", and "next", one or more other parts can be disposed between the two parts unless "just" or "direct" is used.

Ordinal numbers such "first", "second," etc. can be used before the names of elements to distinguish one element from another. However, such ordinal numbers or element names do not limit the function or structure thereof. For convenience of explanation, the same element can be referred to with different ordinal numbers in different embodiments.

Features of various embodiments of the present disclosure can be partially or totally coupled to or combined with each other, and can be variously inter-operated and driven technically. The embodiments of the present disclosure can be carried out independently from each other or can be carried out together with a co-dependent relationship.

Hereinafter, with reference to the accompanying drawings, one or more embodiments of the present disclosure will be described.

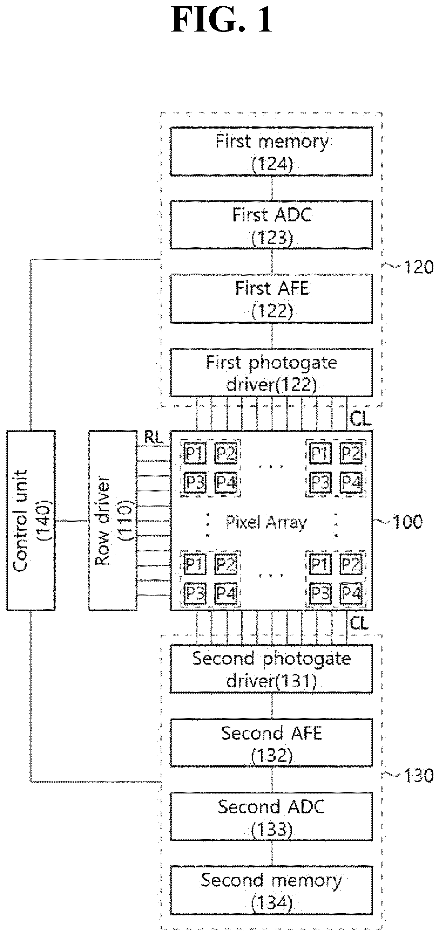

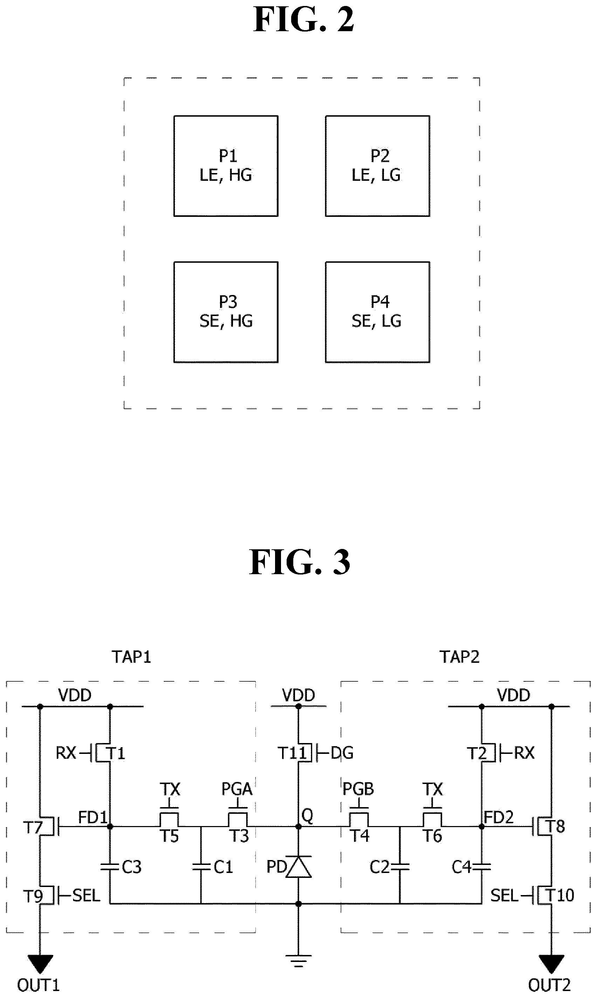

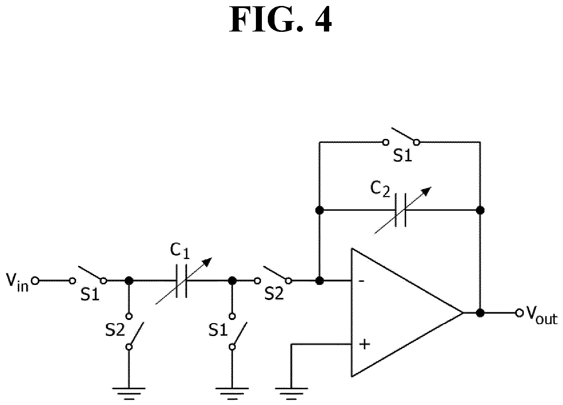

FIG. 1 is a diagram illustrating an image sensor according to one embodiment of the present disclosure, FIG. 2 is a diagram illustrating unit pixels according to the embodiment of the present disclosure, FIG. 3 is a diagram illustrating a pixel circuit illustrated in FIG. 1, and FIG. 4 is a diagram illustrating a circuit of an active front end (AFE) illustrated in FIG. 1.

Referring to FIG. 1, the image sensor according to the embodiment of the present disclosure can include a pixel array 100, a row driver 110, a first readout circuit 120, a second readout circuit 130, and a control unit 140.

The pixel array 100 can include a plurality of pixels, and each of the plurality of pixels can include a light-sensing element and a pixel circuit. The light-sensing element detects light and converts the detected light into photoelectric charges. The light-sensing element can be an element composed of an organic material or an inorganic material, such as an inorganic photodiode or an organic photodiode.

As illustrated in FIG. 3, the pixel circuit can include first to eleventh transistors T1 to T11, first to fourth capacitors C1 to C4, and a photodiode PD. An example in which the transistors used here are N-type metal-oxide-semiconductor (NMOS) transistors is described, but the present disclosure is not necessarily limited thereto.

A first tap TAP1 can include the first transistor T1, the third transistor T3, the fifth transistor T5, the seventh transistor T7, the ninth transistor T9, the first capacitor C1, and the third capacitor C3. A second tap TAP2 can include the second transistor T2, the fourth transistor T4, the sixth transistor T6, the eighth transistor T8, the tenth transistor T10, the second capacitor C2, and the fourth capacitor C4.

The first tap TAP1 and the second tap TAP2 can receive a first photogate signal PG1 and a second photogate signal PG2 of different phases, but can be implemented with the same configuration. The first photogate signal PG1 and the second photogate signal PG2 can have a phase difference of 180 degrees.

The first transistor T1 can supply a driving voltage VDD to a first floating diffusion node FD1 in response to a reset signal RX to initialize the first floating diffusion node FD1. The second transistor T2 can supply a driving voltage VDD to a second floating diffusion node FD2 in response to a reset signal RX to initialize the second floating diffusion node FD2.

The third transistor T3 can be turned on by a first photogate signal PGA to accumulate charges and store the accumulated charges in the first capacitor C1. The fourth transistor T4 can be turned on by a second photogate signal PGB to accumulate charges and store the accumulated charges in the second capacitor C2.

The fifth transistor T5 can connect the first floating diffusion node FD1 to the third transistor T3 to store a transmitted voltage in the third capacitor C3, and the sixth transistor T6 can connect the second floating diffusion node FD2 to the fourth transistor T4 to store a transmitted voltage in the fourth capacitor C4.

The seventh transistor T7 can connect a power line to which a driving voltage VDD is applied to the ninth transistor T9 in response to a voltage of the first floating diffusion node FD1. The eighth transistor T8 can connect a power line to which a driving voltage VDD is applied to the tenth transistor T10 in response to a voltage of the second floating diffusion node FD2.

The ninth transistor T9 can output a voltage transmitted by the seventh transistor T7 to an output terminal OUT1 in response to a selection signal SEL, and the tenth transistor T10 can output a voltage transmitted by the eighth transistor T8 to an output terminal OUT2 in response to a selection signal SEL.

The eleventh transistor T11 can remove or discharge the photoelectric charges accumulated by the third transistor T3 and the fourth transistor T4 to the power line in response to a discharge signal DG.

The photodiode PD can be connected between an optical node Q and a ground line, and can convert a received optical signal into an electrical signal and transmit the converted electrical signal to the optical node Q.

The plurality of pixels can be connected to a plurality of row lines RL and a plurality of column lines CL. The plurality of row lines RL can be respectively connected to pixels arranged in the same column. The plurality of column lines CL can be respectively connected to pixels arranged in the same row.

In the embodiment, four adjacent pixels can constitute one unit pixel. As illustrated in FIG. 2, the unit pixel can include four pixels and can be arranged in the form of a 2×2 matrix. The four pixels constituting the unit pixel can perform the same role when a standard dynamic range (SDR) image is generated, and can perform different roles when a high dynamic range (HDR) image is generated. For example, when an HDR image is generated, pixels P1 and P2 arranged in a first row can be exposed for a long time so that a long exposure image can be obtained, and pixels P3 and P4 arranged in a second row can be exposed for a short time so that a short exposure image can be obtained. A first gain can be applied to values detected from the pixels P1 and P3 arranged in a first column, and a second gain lower than the first gain can be applied to values detected from the pixels P2 and P4 arranged in a second column.

Here, an example of the case in which four pixels constitute a unit pixel is described, but the present disclosure is not necessarily limited thereto, and a plurality of pixels can constitute unit pixels.

The row driver 110 can generate a control signal for driving pixels under the control of the control unit 140 and provide the control signal to each of the plurality of pixels through the row lines RL.

In the embodiment, in order to independently readout photoelectric charges received from each of pixels in odd-numbered rows and even-numbered rows, the row driver 110 can be implemented with two readout circuits can be implemented.

The first readout circuit 120 can collect and store first photoelectric charges corresponding to light received from each of pixels arranged in a first row of each of the unit pixels. The first readout circuit 120 can include a first photogate driver 121, a first AFE 122, a first analog-to-digital converter (ADC) 123, and a first memory 124.

The first photogate driver 121 can apply a first driving signal for driving each of pixels arranged in odd-numbered columns under the control of the control unit 140, the first AFE 122 can collect the first photoelectric charges from the pixels driven by the first driving signal, and the first ADC 123 can convert the first photoelectric charges into first digital data and store the converted first digital data in the first memory 124.

As illustrated in FIG. 4, the first AFE 122 can include a plurality of first switches S1, a plurality of second switches S2, a first variable capacitor C1, a second variable capacitor C2, and an operational amplifier OP.

The first variable capacitor C1 can be connected to an inverting input terminal (-) of the operational amplifier OP, and the second variable capacitor C2 can be connected between an output terminal and a non-inverting input terminal (+) of the operational amplifier OP. The operational amplifier OP can amplify and output an input signal with a predetermined gain. Here, the gain can be a capacitance ratio C1/C2 of the first variable capacitor C1 to the second variable capacitor C2.

In this case, the gain can be changed because the first variable capacitor C1 and the second variable capacitor C2 have capacitances that vary differently. Here, an example of the case in which both two capacitors are variable capacitors is described, but the present disclosure is not necessarily limited thereto. For example, only any one of the two capacitors can be implemented as a variable capacitor.

For example, the first variable capacitor C1 and the second variable capacitor C2 can be configured such that a plurality of capacitors are connected in parallel and selectively connected or are connected in series and selectively connected.

The plurality of first switches S1 and the plurality of second switches S2 can be sequentially driven. That is, when the plurality of first switches S1 are turned on, an input signal can be sampled by the first variable capacitor C1 and stored, and when the plurality of first switches S1 are turned off and the plurality of second switches S2 are turned on, a signal stored in the first variable capacitor C1 can be transmitted to the second variable capacitor C2.

In this case, a voltage output to an output terminal of the operational amplifier OP can be amplified by the gain.

The second readout circuit 130 can collect and store second photoelectric charges corresponding to light received from each of pixels arranged in a second row of each of the unit pixels. The second readout circuit 130 can include a second photogate driver 131, a second AFE 132, a second ADC 133, and a second memory 134.

The second photogate driver 131 can apply a second driving signal for driving each of pixels arranged in even-numbered rows under the control of the control unit 140, the second AFE 132 can collect the second photoelectric charges from the pixels driven by the second driving signal, and the second ADC 133 can convert the second photoelectric charges into second digital data and store the converted second digital data in the second memory 134.

The second AFE 132 can be implemented as illustrated in FIG. 4 in the same way as the first AFE 122 described above.

The control unit 140 can collect the first digital data stored in the first memory 124 and the second digital data stored in the second memory 134, and generate one SDR image or HDR image using the collected first digital data and second digital data.

The image sensor according to the embodiment can be driven in a first mode and a second mode. Here, the first mode can be a mode for generating an SDR image, and the second mode can be a mode for generating an HDR image.

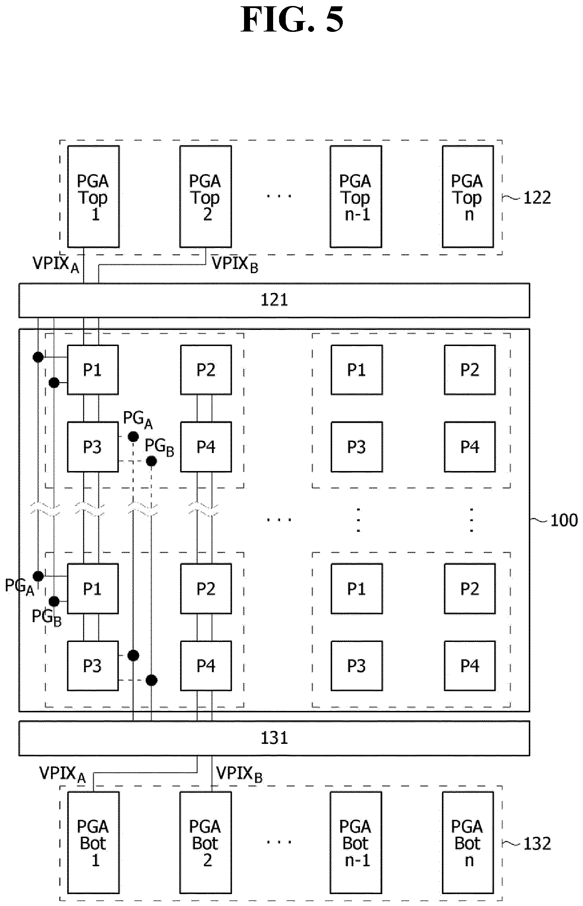

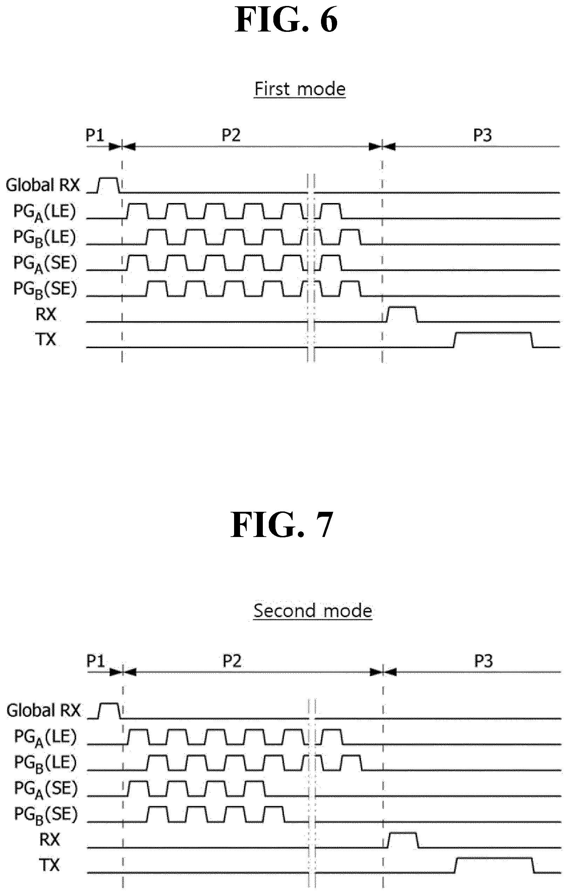

FIG. 5 is a diagram for describing the operation of the image sensor according to first and second modes, and FIG. 6 is a diagram illustrating driving waveforms of the image sensor according to the first mode.

Referring to FIGS. 1, 5, and 6, in the first mode, a first period P1, second period P2, and a third period P3 of the image sensor according to the embodiment can be sequentially driven. The first period can be a global reset period, the second period can be an exposure period with a constant exposure time, and the third period can be a readout period.

In the first period P1, when a reset signal Global RX is applied from the row driver 110, photodiodes and floating diffusion nodes of the pixels arranged in a first column of each of the unit pixels can be initialized.

In the second period P2, the first photogate driver 121 can alternately apply first driving signals PGA(LE) and PGB(LE) for driving the pixels arranged in the first column of each of the unit pixels for a predetermined exposure time.

Similarly, the second photogate driver 131 can alternately apply driving signals PGA(SE) and PGB(SE) for driving the pixels arranged in a second column of each of the unit pixels for a predetermined exposure time.

In the third period P3, the first AFE 122 can collect first photoelectric charges VPIXA and VPIXB corresponding to the light received from each of the pixels, and amplify the collected first photoelectric charges VPIXA and VPIXB with a predetermined gain. The first ADC 123 can convert the amplified first photoelectric charges VPIXA and VPIXB into first digital data, and the converted first digital data can be stored in the first memory 124.

Similarly, the second AFE 132 can collect second photoelectric charges VPIXA and VPIXB corresponding to the light received from each of the pixels, and amplify the collected second photoelectric charges VPIXA and VPIXB with a predetermined gain. The second ADC 133 can convert the amplified second photoelectric charges VPIXA and VPIXB into second digital data, and the converted second digital data can be stored in the second memory 134.

In this case, the first AFE 122 and the second AFE 132 can amplify the photoelectric charges with the same gain.

The control unit 140 can generate one SDR image using the collected first digital data and second digital data. That is, the control unit 140 can generate a first image using the collected first digital data, generate a second image using the second digital data, and combine the first image and the second image to generate one SDR image.

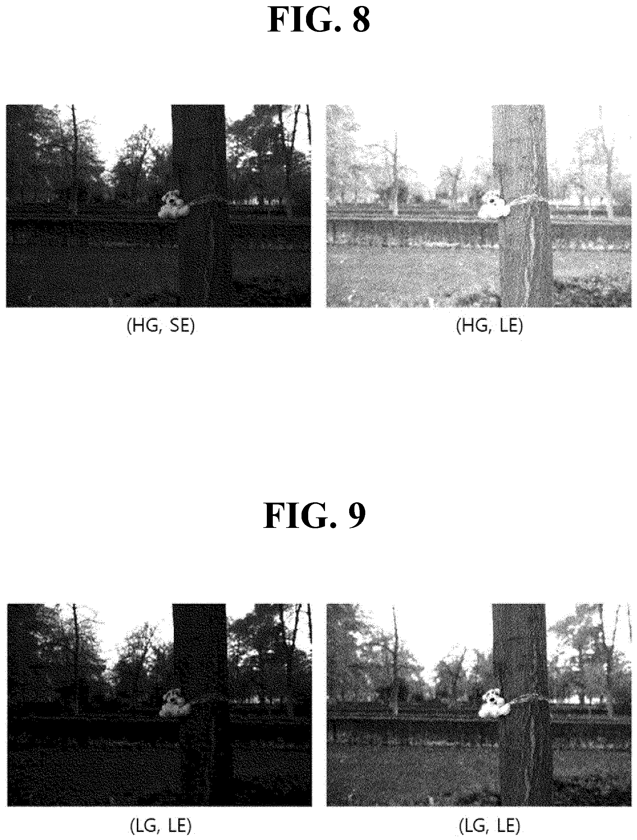

FIG. 7 is a diagram illustrating driving waveforms of the image sensor according to the second mode, and FIGS. 8 to 12 are diagrams for describing the principle of generating an HDR image.

Referring to FIGS. 1, 5, and 7, in the second mode, a first period P1, a second period P2, and a third period P3 of the image sensor according to the embodiment can be sequentially driven. The first period can be a global reset period, the second period can be an exposure period with different exposure time, and the third period can be a readout period.

In the first period P1, when a reset signal Global RX is applied from the row driver 110, the floating diffusion nodes of the pixels arranged in the first column of each of the unit pixels can be initialized.

In the second period P2, the first photogate driver 121 can control an exposure time of the pixels arranged in the first column of each of the unit pixels to be a long time. For example, the short time can be 1/10 [sec].

Similarly, the second photogate driver 131 can control an exposure time of the pixels arranged in the second column of each of the unit pixels to be a short time. For example, the short time can be 1/256 [sec].

In the third period P3, the first AFE 122 can collect the first photoelectric charges VPIXA and VPIXB corresponding to the light received from each of the pixels arranged in the first row of each of the unit pixels, and amplify the collected first photoelectric charges VPIXA and VPIXB with a predetermined first gain. The first ADC 123 can convert the amplified first photoelectric charges VPIXA and VPIXB into first digital data, and the converted first digital data can be stored in the first memory 124.

Similarly, the second AFE 132 can collect the second photoelectric charges VPIXA and VPIXB corresponding to the light received from each of the pixels arranged in the second row of each of the unit pixels, and amplify the collected second photoelectric charges VPIXA and VPIXB with a predetermined second gain. The second ADC 133 can convert the amplified second photoelectric charges VPIXA and VPIXB into second digital data, and the converted second digital data can be stored in the second memory 134.

In this case, the first gain can be a value greater than the second gain, but the present disclosure is not necessarily limited thereto.

The control unit 140 can generate one HDR image using the collected first digital data and second digital data.

Specifically, the control unit 140 can generate first short exposure images HG and SE and first long exposure images HG and LE using the collected first digital data as illustrated in FIG. 8, and generate second short exposure images LG and SE and first long exposure images LG and LE using the collected second digital data as illustrated in FIG. 9.

In this case, HG represents an image to which a relatively high value of the first gain is applied, and LG represents an image to which a relatively low value of the second gain is applied. LE represents an image obtained by being exposed for a long time, and SE represents an image obtained by being exposed for a short time.

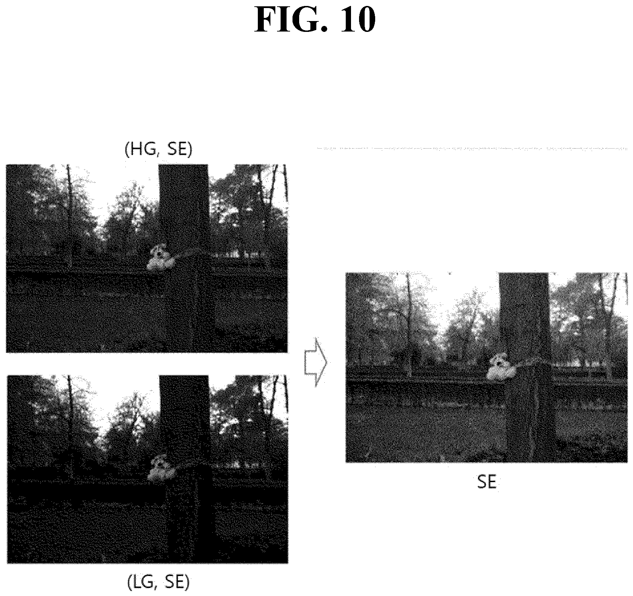

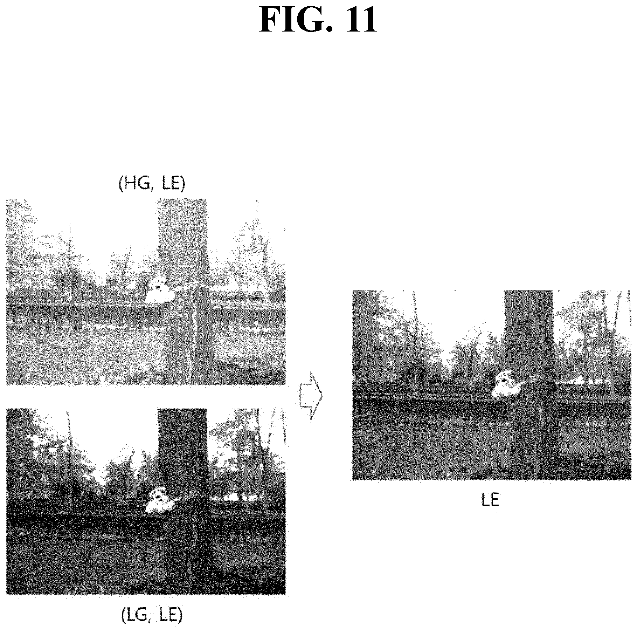

The control unit 140 can generate a first image by combining the first short exposure image and the second short exposure image as illustrated in FIG. 10, and generate a second image by combining the first long exposure image and the second long exposure image as illustrated in FIG. 11.

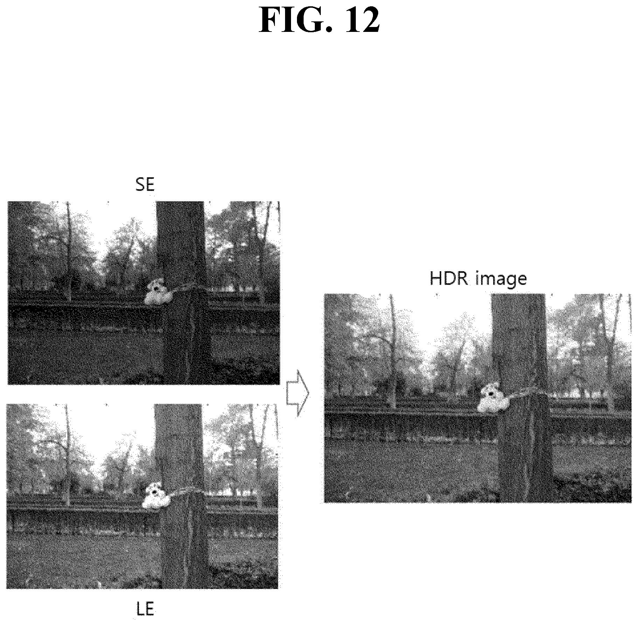

The control unit 140 can generate one HDR image as a final output image by combining the first image, which is a short exposure image, and the second image, which is a long exposure image, as illustrated in FIG. 12.

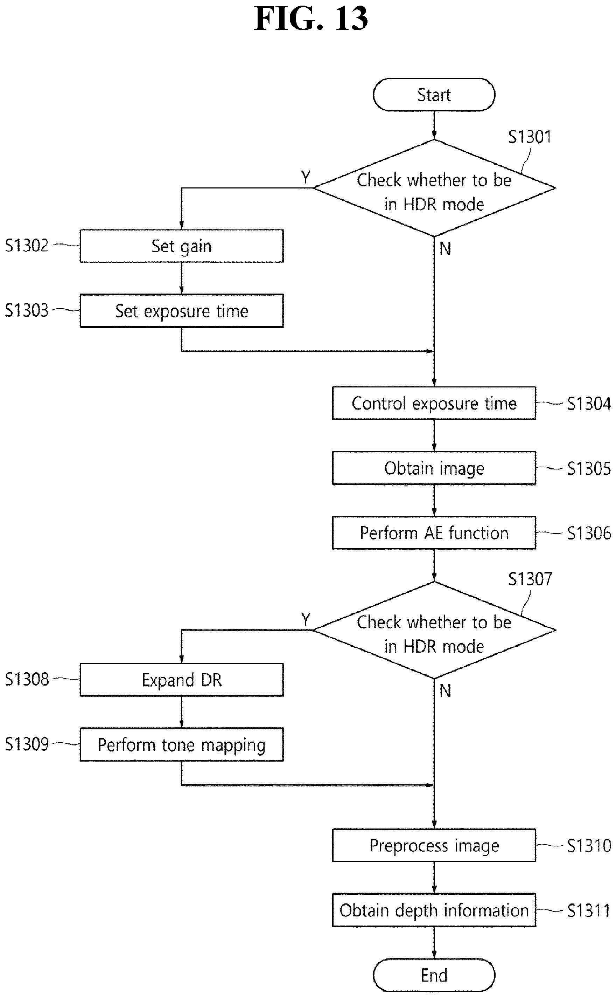

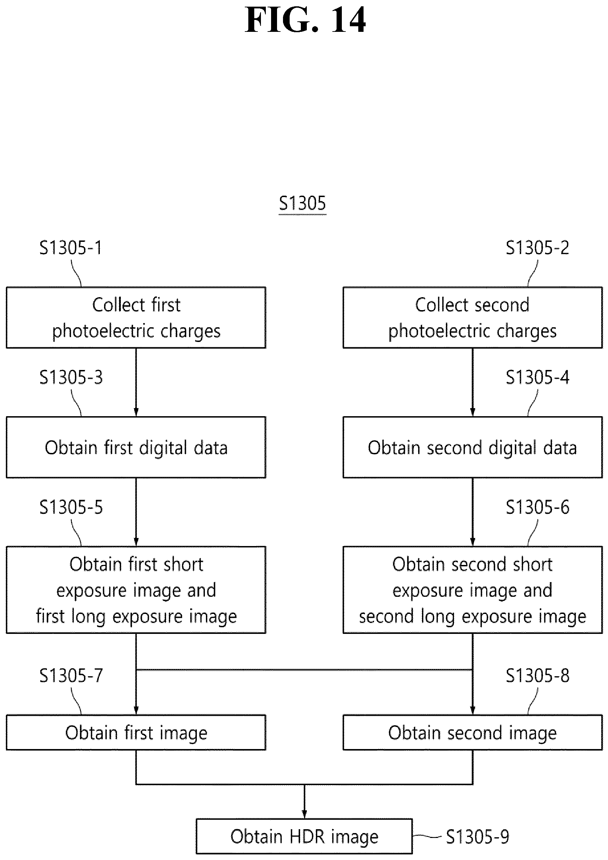

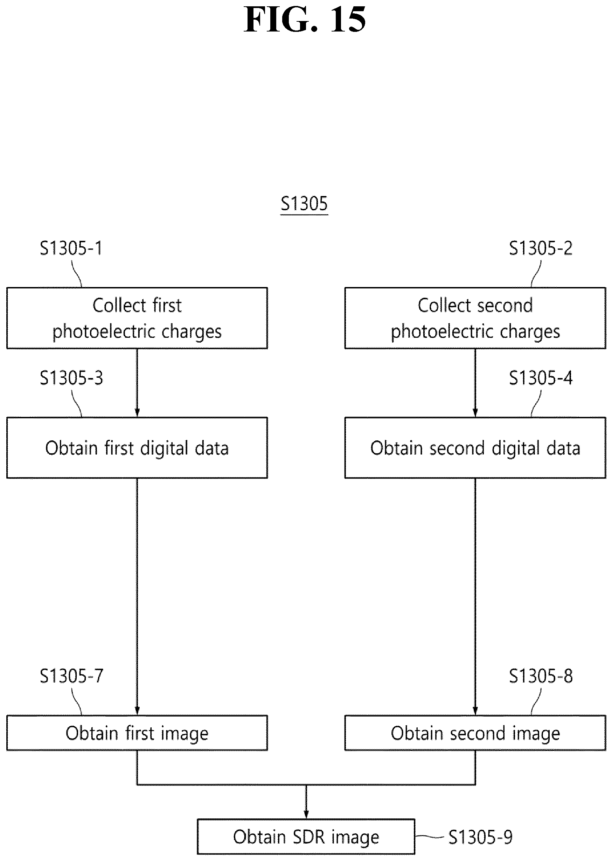

FIG. 13 is a flowchart illustrating a method of generating an image according to one embodiment of the present disclosure, FIG. 14 is a flowchart illustrating a process of generating an HDR image, and FIG. 15 is a flowchart illustrating a process of generating an SDR image.

Referring to FIG. 13, the image sensor according to the embodiment can check whether the image sensor is set to be in an HDR mode (S1301), and set a gain (S1302) and set an exposure time (S1303) when it is determined that the image sensor is set to be in the HDR mode. Here, the gain includes a first gain and a second gain lower than the first gain. The exposure time includes a first exposure time and a second exposure time shorter than the first exposure time.

Next, the image sensor can control the exposure time of the pixels on the basis of the set first and second gains and the set first and second exposure time (S1304), and obtain an image using the photoelectric charges collected from the pixels whose exposure time is controlled (S1305).

Specifically, as illustrated in FIG. 14 the image sensor can collect first photoelectric charges and second photoelectric charges (S1305-1 and S1305-2), digital-convert the collected first photoelectric charges to obtain first digital data (S1305-3), and digital-convert the collected second photoelectric charges to obtain second digital data (S1305-4).

The image sensor can obtain a first short exposure image and a first long exposure image using the first digital data (S1305-5), and obtain a second short exposure image and a second long exposure image using the second digital data (S1305-6).

The image sensor can obtain a first image by combining the first short exposure image and the second short exposure image (S1305-7), and obtain a second image by combining the first long exposure image and the second long exposure image (S1305-8).

The image sensor can obtain an HDR image by combining the first image and the second image (S1305-9).

On the other hand, when it is determined that the image sensor is not set to be in the HDR mode, the image sensor can control the exposure time of the pixels on the basis of a preset reference gain and a preset reference exposure time (S1304), and obtain an image using the photoelectric charges collected from the pixels whose exposure time is controlled (S1305).

Specifically, as illustrated in FIG. 15, the image sensor can collect first photoelectric charges and second photoelectric charges (S1305-1 and S1305-2), digital-convert the collected first photoelectric charges to obtain the first digital data (S1305-3), and digital-convert the collected second photoelectric charges to obtain the second digital data (S1305-4).

The image sensor can obtain the first image using the first digital data (S1305-7), and obtain the second image using the second digital data (S1305-8).

The image sensor can obtain an SDR image by combining the first image and the second image (S1305-9).

Next, the image sensor can perform an auto exposure (AE) function (S1306). The AE function refers to a function that automatically determines and adjusts the appropriate brightness of the image.

Next, the image sensor can check whether the image sensor is set to be in the HDR mode (S1307), and when it is determined that the image sensor is set to be in the HDR mode, the image sensor can expand a dynamic range (DR) of the first digital data (S1308) and perform tone mapping according to the expanded dynamic range (S1309).

Next, the image sensor can preprocess the obtained HDR image (S1310). For example, the image sensor can perform preprocessing such as removing noise from the HDR image or the like.

Next, the image sensor can obtain depth information from the preprocessed HDR image (S1311). The image sensor can obtain the depth information using a predefined algorithm.

On the other hand, the image sensor can preprocess the SDR image obtained in the case in which the image sensor is not set to be in the HDR mode (S1310).

Next, the image sensor can obtain the depth information from the preprocessed SDR image (S1311).

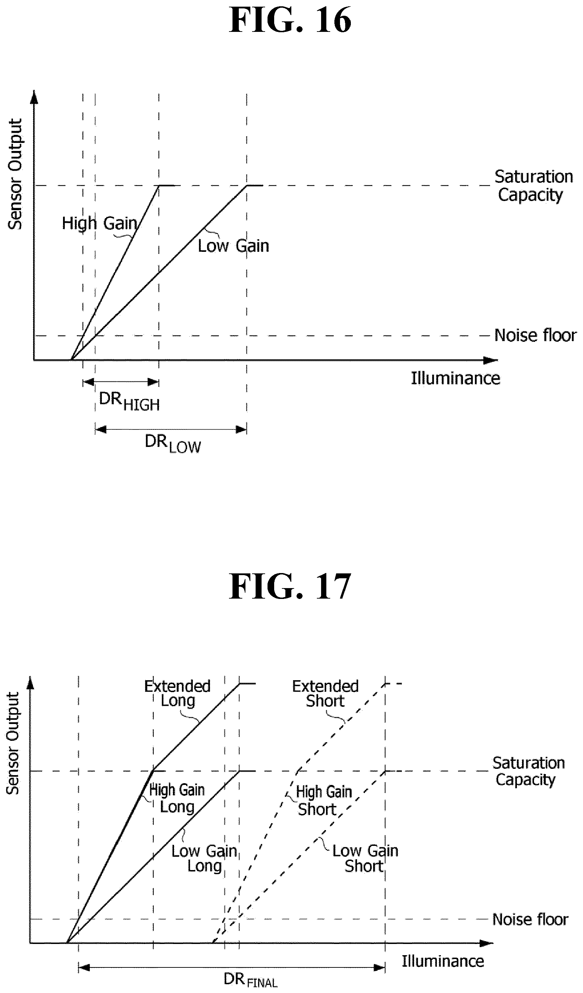

FIGS. 16 to 19 are graphs for describing the expansion of dynamic ranges of an image sensor.

Due to the characteristics of a time-of flight (ToF) image sensor using an external active light source, relatively close objects or objects with high reflectivity are likely to be saturated because the objects exceed the full-well capacity (FWC) of a unit pixel, and relatively distant objects or objects with low reflectivity have a low signal-to-noise ratio (SNR) because a photoelectric charge signal is small. In order to solve this problem, this embodiment aims to expand the dynamic range of the image sensor.

Referring to FIG. 16, the photoelectric charges received from each pixel shows the output (sensor output) of the image sensor according to illuminance according to a first gain (high gain) and a second gain (low gain), that is, digital data. Time points at which the saturation capacity reaches are different depending on the gains, and thus a dynamic range DRHIGH of first digital data to which the first gain is applied is formed smaller than a dynamic range DRLOW of second digital data to which the second gain is applied.

Referring to FIG. 17, by predicting the dynamic range of the first digital data in consideration of the dynamic range of the second digital data, the dynamic ranges of the first digital data can be expanded. The dynamic ranges DRLOW of the second digital data are the same, but a dynamic range DRFINAL of final first digital data is expanded by an extended dynamic range DREXT, and as a result, the dynamic range DRFINAL of final first digital data is greater than the dynamic range DRLOW of the second digital data.

In order to expand the dynamic range of the first digital data, the pixel to which the second gain is applied should be positioned adjacent to the pixel to which the first gain is applied, as described in this embodiment.

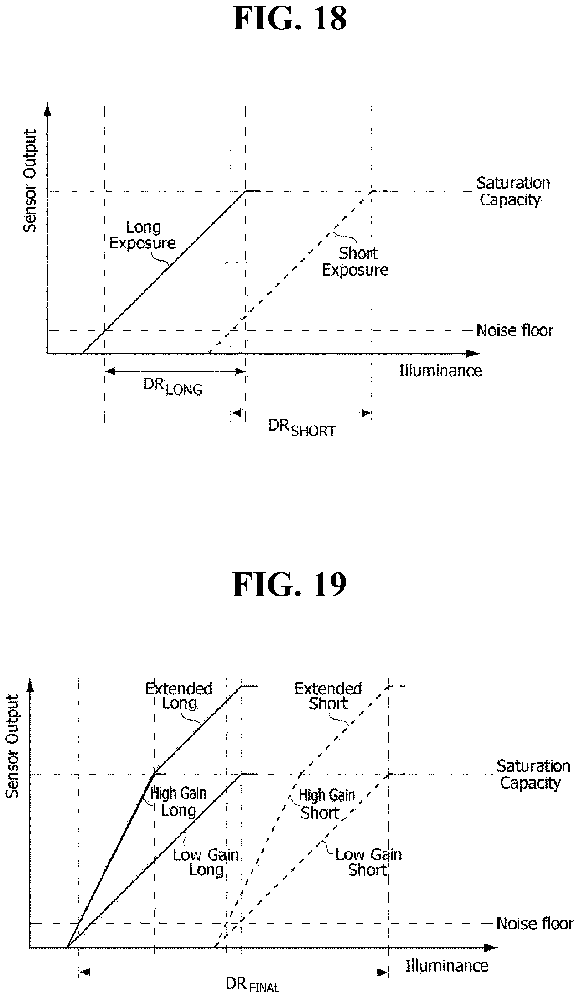

Referring to FIG. 18, a dynamic range DRSHORT for pixels exposed for a long time can be different from a dynamic range DRLONG for pixels exposed for a short time.

However, the dynamic range is a dynamic range for the second gain, and the dynamic range for the first gain is smaller than the dynamic range for the second gain.

Referring to FIG. 19, by predicting the dynamic range of the first digital data in consideration of the dynamic range of the second digital data, the dynamic ranges of the first digital data can be expanded. That is, the dynamic ranges of the second digital data of each of the pixels exposed for a long time and the pixels exposed for a short time are the same, but the dynamic ranges of the first digital data are expanded.

Therefore, the dynamic ranges DRFINAL for all the pixels can be further expanded.

In this way, in the embodiment, by expanding the dynamic range, a range of the luminance can be widened, and thus the sensitivity to distant objects or objects with low reflectivity can be improved.

Although the embodiments have been described in more detail with reference to the accompanying drawings, the present disclosure is not necessarily limited to these embodiments, and can be variously modified without departing from the technical concept of the present disclosure. Therefore, the embodiments disclosed in the present disclosure should be considered in a descriptive sense only and not for limiting the technological scope. The technical concept of the present disclosure is not limited by these embodiments. Therefore, the above-described embodiments should be considered in a descriptive sense only and not for purposes of limitation.

## Claims

1. An image sensor comprising:
a pixel array in which a plurality of unit pixels are arranged;
a row driver configured to generate a control signal for driving the plurality of unit pixels;
a readout circuit configured to collect photoelectric charges from the plurality of unit pixels in units of rows according to the control signal; and
a control unit configured to generate a high dynamic range (HDR) image and depth information using the collected photoelectric charges,
wherein each of the plurality of unit pixels includes:
a plurality of first pixels which are exposed for a first exposure time, and
a plurality of second pixels which are exposed for a second exposure time shorter than the first exposure time.

2. The image sensor of claim 1, wherein the plurality of first pixels are arranged in a first column, and the plurality of second pixels are arranged in a second column.

3. The image sensor of claim 1, wherein the readout circuit amplifies photoelectric charges collected from pixels arranged in odd-numbered rows with a preset first gain, and
amplifies photoelectric charges collected from pixels arranged in even-numbered rows with a second gain smaller than the first gain.

4. An image sensor comprising:
a pixel array in which a plurality of pixels are arranged;
a row driver configured to generate a control signal for driving the plurality of pixels;
a first readout circuit configured to collect first photoelectric charges from pixels arranged in odd-numbered rows according to the control signal;
a second readout circuit configured to collect second photoelectric charges from pixels arranged in even-numbered rows according to the control signal; and
a control unit configured to generate a first image using the collected first photoelectric charges, generate a second image using the collected second photoelectric charges, and generate a high dynamic range (HDR) image and depth information by combining the first image and the second image.

5. The image sensor of claim 4, wherein the first readout circuit generates a first driving signal for driving pixels arranged in odd-numbered columns for a first exposure time,
the second readout circuit generates a second driving signal for driving pixels arranged in even-numbered columns for a second exposure time shorter than the first exposure time.

6. The image sensor of claim 5, wherein the first readout circuit includes:
a first photogate driver that generates the first driving signal;
a first active front end (AFE) that collects the first photoelectric charges from the pixels arranged in the odd-numbered rows and amplifies the collected first photoelectric charges with a first gain;
a first analog-to-digital converter (ADC) that digital-converts the amplified first photoelectric charges and generates first digital data; and
a first memory that stores the generated first digital data.

7. The image sensor of claim 6, wherein the second readout circuit includes:
a second photogate driver that generates the second driving signal;
a second AFE that collects the second photoelectric charges from the pixels arranged in the even-numbered rows and amplifies the collected second photoelectric charges with a second gain lower than the first gain;
a second ADC that digital-converts the amplified second photoelectric charges and generates second digital data; and
a second memory that stores the generated second digital data.

8. The image sensor of claim 7, wherein the control unit generates a first short exposure image and a first long exposure image using the first digital data and generates a second short exposure image and a second long exposure image using the second digital data.

9. The image sensor of claim 8, wherein the control unit generates the first image by combining the first short exposure image and the second short exposure image, generates the second image by combining the first long exposure image and the second long exposure image, and generates the HDR image by combining the first image and the second image.

10. The image sensor of claim 7, wherein the control unit expands a dynamic range of the first digital data and performs tone mapping of the first digital data according to the expanded dynamic range.
